# EUROPEAN PATENT APPLICATION

(11) **EP 2 037 359 A1**
(43) Date of publication of application: **18.03.2009**
(21) Application number: 07023376.2
(22) Date of filing: 03.12.2007
(51) Int. Cl.: G06F 9/44

(54) **A method and a system for generating project-related requirements**

(30) Priority: 14.09.2007 EP 07018120
(71) Applicant: SIEMENS AKTIENGESELLSCHAFT, 80333 München (DE)
(72) Inventor: Boulila, Naoufel, Dr., 80809 München (DE)

(57) **Abstract**

A system for generating project-related requirements for a project, wherein a prototype which implements said project based on initial project requirements is run iteratively to derive updated project requirements for forming an updated prototype which implements the project based on said updated project requirements.

## Description

The invention relates to a system and a method for generating project-related requirements in a model driven requirement development approach BIRD (Bootstrapping Incremental Requirements Development). In many cases engineering projects start with unclear requirements or ill-defined requirements. In exploratory software development customers and developers sometimes lack clear requirements and define, develop and refine the requirements of the project. Conventional methods for requirements elicitation include brain storming, meetings, stackholder interviews, scenarios and video conferences etc.

These conventional methods are heuristic and not adapted to generate project related requirements in a systematic manner.

Accordingly it is an object of the present invention to provide a method and a system for generating project related requirements systematically.

This object is achieved by a method for generating project related requirements for a project, wherein a prototype which implements said project based on initial project requirements is run iteratively to derive updated project requirements for an updated prototype which implements the project based on said updated project requirements.

In an embodiment of the method according to the present invention the prototype is executed iteratively until the derived updated project requirements remain unchanged in an iteration.

In an embodiment of the method according to the present invention the prototype is formed by a prototype software model of said project.

In an embodiment of the method according to the present invention initial additional project requirements are generated during an iteration.

The invention further provides a computer program comprising instructions for performing a method for generating project related requirements for a project, wherein a prototype which implements said project based on initial project requirements is run iteratively to derive updated project requirements for forming an updated prototype which implements said project based on said updated project requirements.

The invention further provides a data carrier for storing a computer program comprising instructions for performing a method for generating project related requirements for a project, wherein a prototype which implements said project based on initial project requirements is run iteratively to derive updated project requirements for an updated prototype which implements said project based on said updated project requirements.

The invention further provides a system for generating project related requirements for a project, wherein a prototype which implements said project based on initial project requirements is run iteratively to derive updated project requirements for forming an updated prototype which implements said project based on said updated project requirements.

In an embodiment of the system according to the present invention the prototype is executed iteratively until the derived updated project requirements remain unchanged in an iteration.

In an embodiment of the system according to the present invention the prototype is formed by a prototype software model of said project.

In an embodiment of the system according to the present invention additional project requirements are generated in an iteration.

In the following preferred embodiment of the method and system according to the present invention are described with reference to the enclosed figures.
- Figure 1: shows a diagram for illustrating a possible embodiment of the method according to the present invention;
- Figure 2: shows a further diagram for illustrating an embodiment of the method according to the present invention;
- Figure 3: illustrates an abstract bootstrapping process as employed by the method according to the present invention;
- Figure 4: shows an UML-activity state diagram for illustrating a possible embodiment of the method according to the present invention;
- Figure 5: shows a further diagram for illustrating an incremental developing of requirements as performed by the method according to the present invention;
- Figure 6: shows an UML composite pattern illustrating a bootstrapping metamodel process as employed by the method according to the present invention;
- Figure 7: shows an UML-activity diagram for illustrating a possible embodiment of the method according to the present invention;
- Figure 8: shows a further UML-activity diagram for illustrating a possible embodiment of the method according to the present invention;
- Figure 9: shows a set up illustrating an application of the method and system according to the present invention for software design;
- Figure 10: illustrates a bootstrapping initial step as employed by a possible embodiments of the method according to the present invention;
- Figure 11: shows a participative design process as employed by a possible embodiment of the method according to the present invention;
- Figure 12: shows the application of a bootstrapping design approach in designing a SCOOP-framework as a possible application of the method according to the present invention.

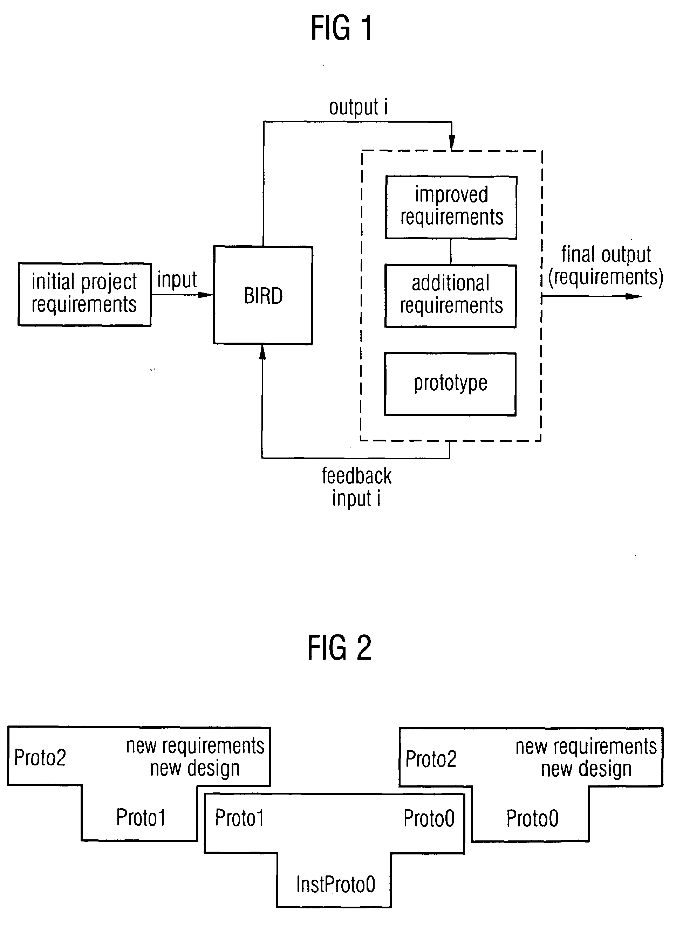

As can be seen in figure 1 showing the principle underlying the method and system according to the present invention initial project requirements are input to a BIRD (Bootstrapping Incremental Requirements Development) process. The BIRD-process receives the initial project requirements and generates in each iteration step improved requirements, additional requirements and an updated prototype. The prototype can be formed by a prototype software model of the respective project. An initial prototype implements the project based on the initial project requirements input for example by a project manager. A prototype which implements the project based on the initial project requirements is run iteratively to derive updated project requirements for an updated prototype. The updated prototype implements the same project based on the updated improved project requirements. The iteration loop shown in figure 1 is performed until the derived updated project requirements remain unchanged in an iteration. During iterations already existing requirements are updated. Furthermore beside the already existing requirements additional requirements can be generated in each iteration so that the number of project requirements generated in the bootstrapping process can increase. When the updated project requirements of an iteration i are identical with the project requirements of a preceeding iteration i-1 and no additional requirements are generated the bootstrapping process is stopped and the project requirements generated during the last iteration loop are output as the project requirements of the respective project. The final output is formed by the stable requirements. The stable final project requirements can be generated for a given phase of a project as well.

The initial prototype is an implementation or materialization of the initial requirements supplied by a user. The method according to the present invention uses a formative and evolutionary approach to develop further prototypes and to develop automatically in an incremental manner project related requirements. In the method and system according to the present invention initial requirements are used to form a prototype software then to use the prototype software model to improve current requirements and to derive updated requirements. The updated requirements are then used to improve the prototype itself by feedback of the generated requirements.

Figure 2 shows a diagram for illustration a bootstrapping updated requirement prototype. In proto 0 is a handcrafted version of proto 1. It is used to develop and explore requirements for the next version of prototype proto 2 which in turn is used to develop subsequent versions. The bootstrapping process continues further until getting a stable version of project requirements.

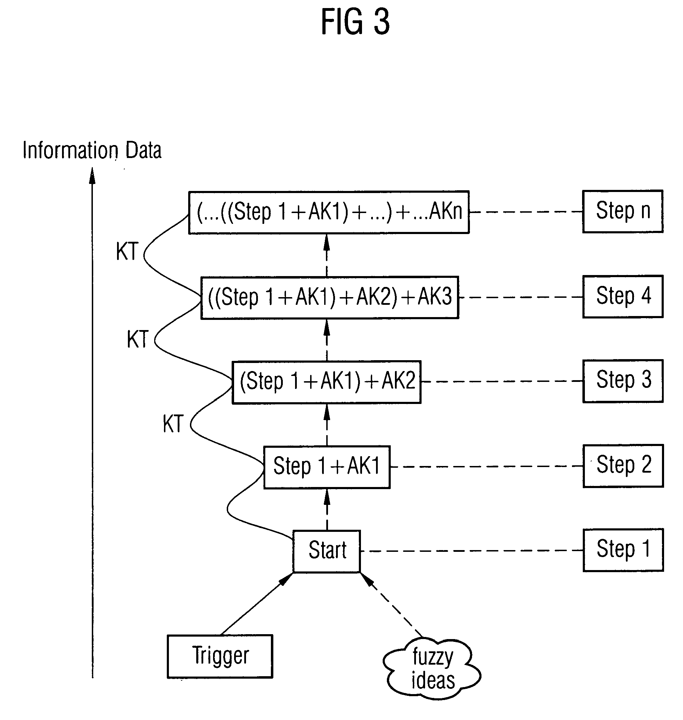

Figure 3 shows a diagram for illustrating an abstract bootstrapping process. The start begins with a starting set of unclear project requirements and information data about the requirements. A subsequent step uses the information data (AK: acquired knowledge) produced/gained in the previous step to gain more information data which in turn is transferred (KT: knowledge transfer) to the next step. A bootstrapping process is an information creation and transfer process which uses current information data to build up subsequent information data.

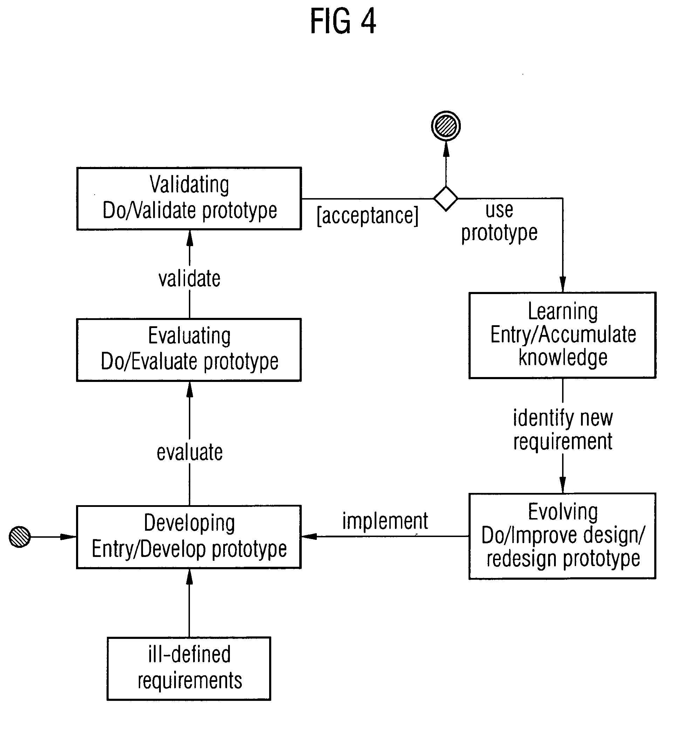

Figure 4 shows an UML-activity state diagram to describe a bootstrapping process as employed by the method according to an embodiment of the present invention. The input comprises requirements which serve as a start point to the iterative bootstrapping process. The project related information data gained during a step i is used to improve or update current requirements. Then the improved or updated project requirements are translated into functionalities of the prototype which is used to generate updated requirements and to generate additional or further requirements. Information gained in one information step is then transferred into the next iteration step.

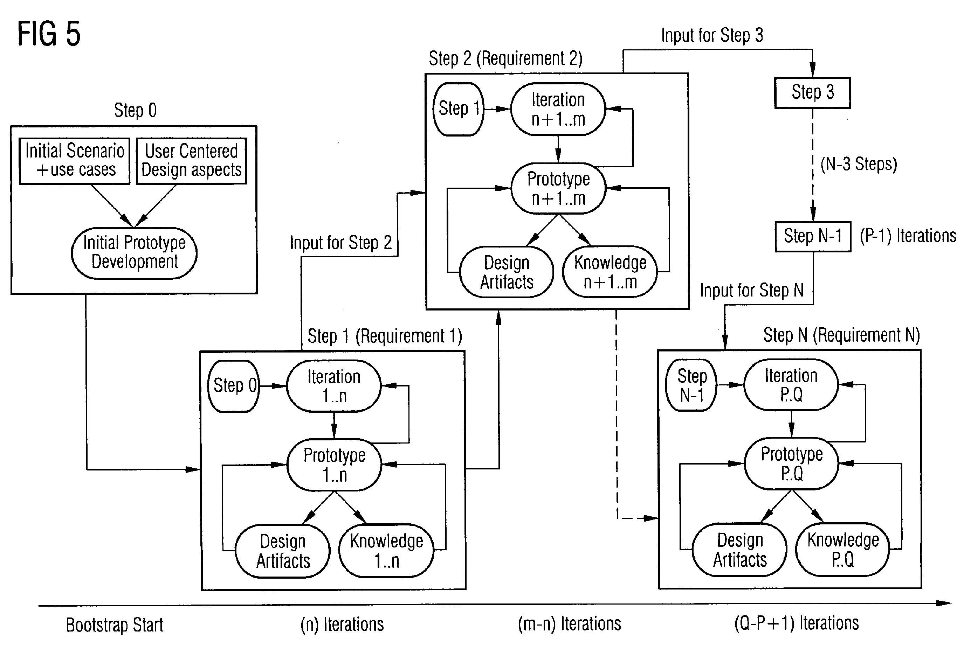

Figure 5 shows a diagram for illustrating a possible embodiment of the method according to the present invention.

In step 0 (trigger) the bootstrapping is started. On the basis of the initial project requirements a user or developer can not yet specify all functionalities or build prototypes. However, with the method according to the present invention using techniques such as scenario driven development and user centered design approaches it is possible to evolve the current available requirements into better specifications for requirements to enable making an initial design and to build a basic initial prototype. The initial prototype can be formed by a software model of the project. This initial prototype can have basic capabilities enabling its utilization in the dedicated environment.

A first step S1 of a bootstrapping process is based on the information data gained from step 0. A process development step as shown in figure 5 can be performed at meetings for requirements trawling where stakeholders, developers and users attend. This step can consist of several (n) iterations. These iterations are performed to generate requirements of the prototype itself. The prototype evolves from one iteration to another. It is possible that eventually one has n-times improved a given functionality or developed further functionalities. The design artefact shown in figure 5 can be formed by a revised models designed by the participants utilizing the prototype to improve the behaviour of the prototype. These modules can describe functionalities for stakeholders. For example a design artefact can be a model designed for a given functionality during one iteration and incorporated into a system prototype and used in subsequent iterations. In n-iterations, a design artefact evolves and can be changed n-times. Design artefacts may exist only temporarily and disappear as soon as the functionality is built and is incorporated into the system. Project related Information data can be accumulated automatically over time during several meetings. The generated information data is, e.g. used in redesigning the prototype in subsequent BIRD-steps. In a possible embodiment information data instep 1 which is produced after n-iterations can serve as a basis for a further BIRD-step 2 and will evolve to information data m after (n-m) iterations.

In the Nth-step of the bootstrapping process as shown in figure 5 the bootstrapping process is completed. The BIRD-step N takes place based on the results of the previous BIRD-step N-1 which takes p-1 iteration to complete. Using the prototype and information data from step N-1 one or several design artefacts are produced and are fed back to the prototype. The information data produced during iterations p..q is used to redesign the prototype utilizing the design artefacts. In a possible embodiment it is iterated over step N(q-p+1) times until the desired date of the prototype is achieved. The desired state is an accepted functionality of the system which can be traced to corresponding requirements.

Knowledge p remains the same in a worst case and evolves to knowledge q in a best case:

Knowledge (q) (step (N)) ≥ knowledge (q) (step(N-1)).
It is necessary to have more knowledge or information data to move from a current step N-1 to a step N.

Each step of the BIRD-method shown in figure 5 is a bootstrapping process in itself. To arrive to stable requirements one can conduct several sessions in which an incremental iteration is performed using an inner bootstrapping process.

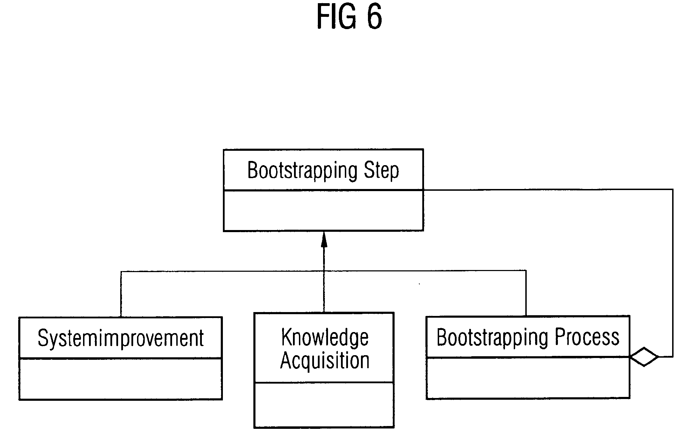

Figure 6 shows a bootstrapping metamodel process for illustrating a possible embodiment of the method according to the present invention. The bootstrapping process is a set of activities that are building upon each other starting from a basic state. Knowledge acquisition and system improvement are characteristics of a bootstrapping step. The system improvement activity yields an improved prototype for the subsequent bootstrapping bootstrapping step using information acquired during the current bootstrapping step.

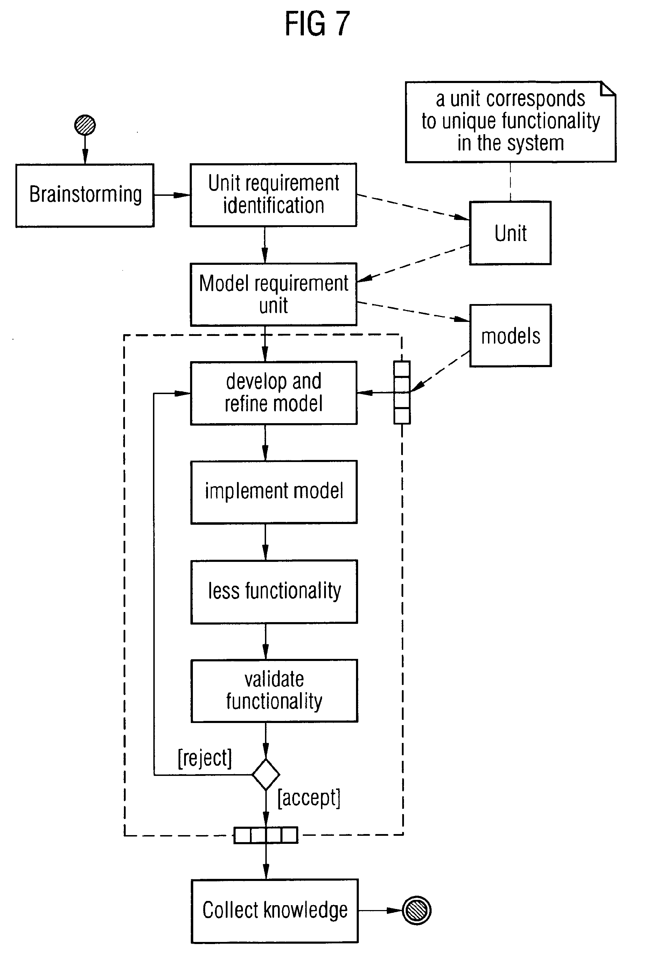

Figure 7 shows an elaborated model of BIRD-step N as an UML-activity diagram.

In a possible embodiment the method and system according to the present invention can be applied to the design and development of a framework SCOOP. SCOOP is a distributed collaborative framework supporting real time distributed software modelling using UML. The informative approach according to the method of the present invention can cover not only testing and improving a sequence of prototypes but also identifying additional requirements, testing them with users and eliciting requirements. The results of these activities can be incorporated in evaluation prototypes. One can use a SCOOP prototype to track additional requirements, design and improve the SCOOP framework itself.

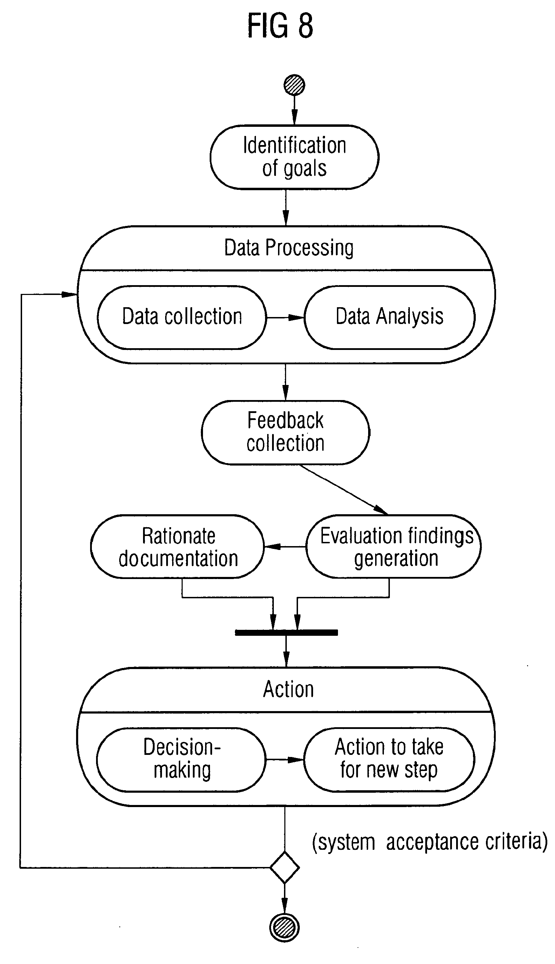

Figure 8 shows an UML-activity diagram of a formative approach for the identification of evaluation goals, the planning of data collection and analysis.

In the given example the initial requirements for a SCOOP framework were vague and not fully defined for several reasons such as lack of full knowledge of distributed synchronous software design meetings and of the potential users and their needs.

For the initial step in the given example a user centered design approach is used to design an initial version of SCOOP. For the rest of the bootstrapping BIRD-steps a participative design approach can be employed where users can use the current version of SCOOP to design the next version of SCOOP.

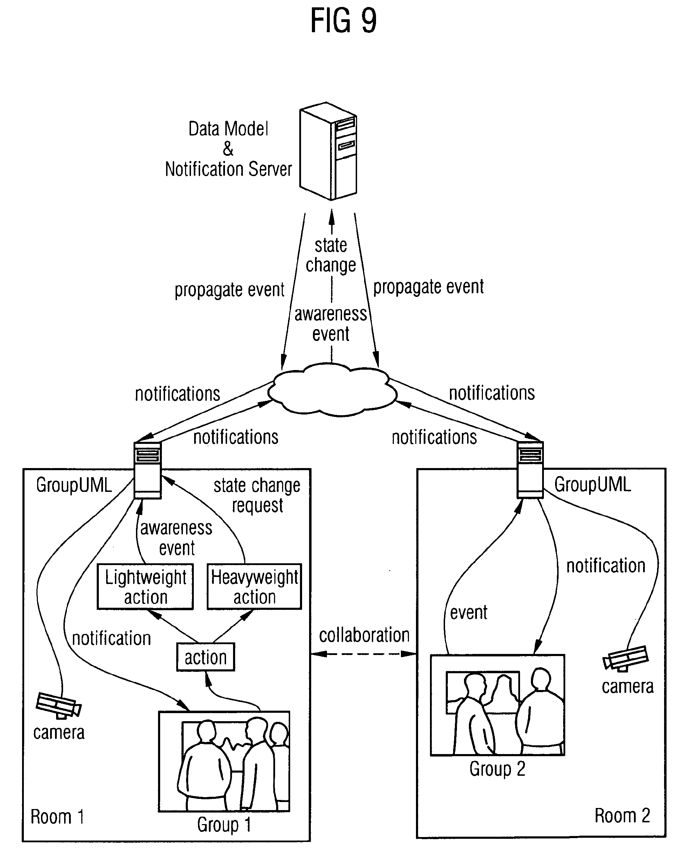

Figure 9 describes a set up for the given example. In the given example two different groups located in two different rooms are collaborating over software design using a SCOOP instance (Group UML). The remote users use smart boards to interact with SCOOP and their peers. SCOOP updates a model located in a remote server through remote notifications. The model server shown in figure 9 propagates the change to all SCOOP applicants.

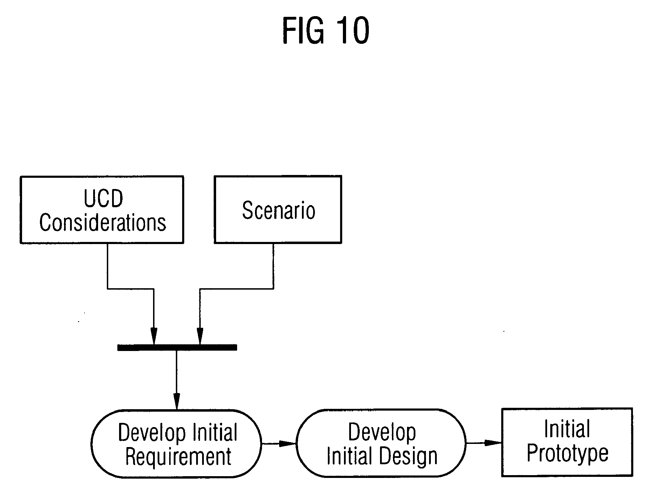

In a bootstrapped start step as shown in figure 10 an initial distributed session is conducted to gather requirements for example by interviews using questions such as questions directed to what sort of task must be supported and mediated by an initial prototype.

As shown in figure 10 a user centered design approach (UCD) can be used in the development of the initial requirements. UCD focus on the artefacts being designed, e.g. an object, communication, space, interface, service etc. UCD seeks to answer questions about users and their tasks and goals. Then UCD uses the findings i.e. the answers, feedback and initial exploration to drive development and design. UCD seeks to answer questions such as who are the users of the system, their tasks and goals, experience levels of the users in the system, functions of the users in the system and information needed by the users etc.

UCD can be used to drive the improvement the usability and usefulness the software modes. Usefulness of a system relates to its relevance to the user whereas usability of the system relates to its ease of use. Primary data can be collected or secondary sources can be used to learn about the needs of the users. This information data can form design criteria or requirements.
In a user centered design approach the roles of a researcher and a designer are distinct but still independent. To test a specific design a team puts together a preliminary version that corresponds to a product.

The initial step 0 of the process to generate project related requirements triggers a bootstrapping process of the design or development of SCOOP. A prototype from step N-1 is used to evolve the requirements. An initial prototype of SCOOP serves as a platform to conduct distributed software design meetings where the design challenge is the design of SCOOP itself. The bootstrapping step N can benefit from the participative design approach.

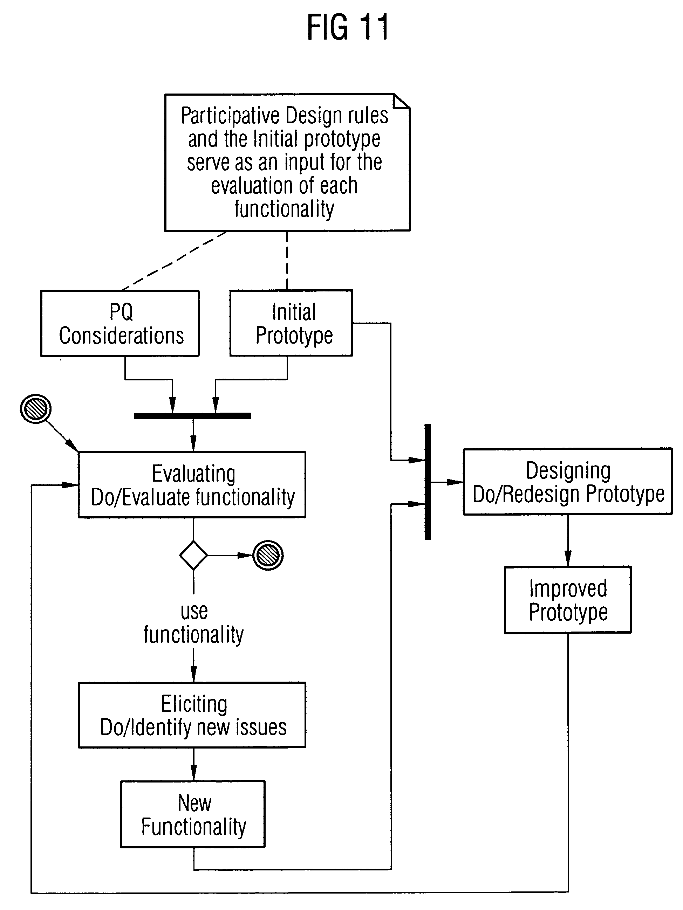

Figure 11 shows a participative design with a bootstrapping approach as employed by a possible embodiment of the method according to the present invention. The user centered approach corresponds to the initial bootstrapping step that triggers the bootstrapping process.

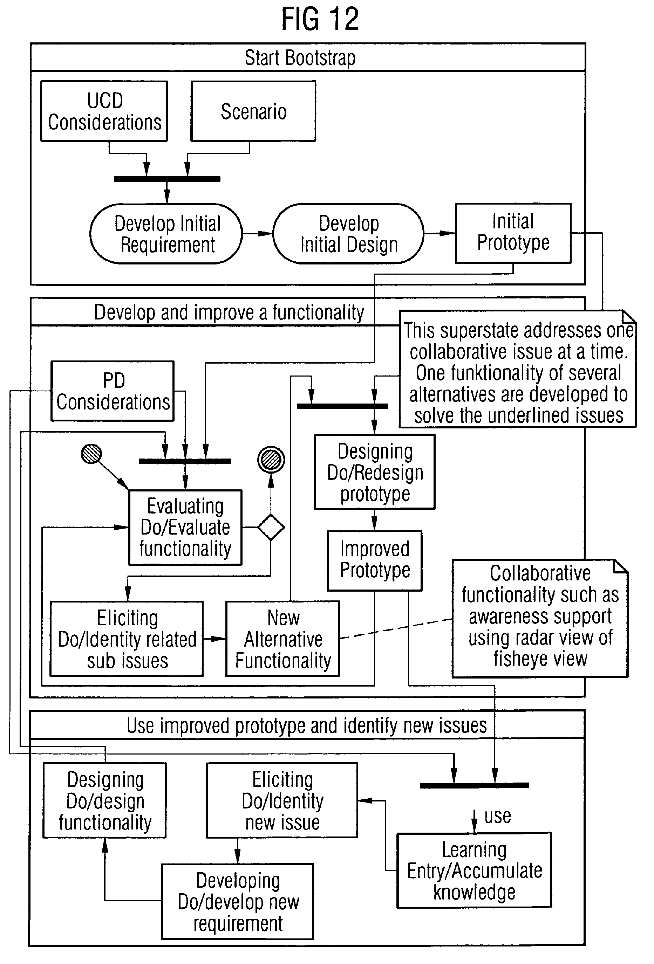

Figure 12 shows the application of a bootstrapping design approach as employed by the method according to present invention in designing a SCOOP framework.

The method according to the present invention uses an informative and evolutionary approach to develop prototypes wherein improvements are made automatically and incrementally.

## Claims

1. A method for generating project-related requirements for a project, wherein a prototype which implements said project based on initial project requirements is run iteratively to derive updated project requirements for forming an updated prototype which implements said project based on said updated project requirements.

2. The method according to claim 1, wherein the prototype is executed iteratively until the derived updated project requirements remain unchanged during an iteration.

3. The method according to claim 1, wherein said prototype is formed by a prototype software model of said project.

4. The method according to claim 1, wherein additional project requirements are generated during an iteration.

5. A computer program comprising instructions for performing the method according to claims 1-4.

6. A data carrier for storing a computer program according to claim 5.

7. A system for generating project-related requirements for a project, wherein a prototype which implements said project based on initial project requirements is run iteratively to derive updated project requirements for forming an updated prototype which implements the project based on said updated project requirements.

8. The system according to claim 7, wherein the prototype is executed iteratively until the derived updated project requirements remain unchanged during an iteration.

9. The method according to claim 7, wherein said prototype is formed by a prototype software model of said project.

10. The system according to claim 7, wherein additional project requirements are generated during an iteration.
